# EUROPEAN PATENT SPECIFICATION

(11) **EP 3 453 087 B1**
(45) Date of publication and mention of the grant of the patent: **12.08.2020**
(21) Application number: 17723491.1
(22) Date of filing: 05.05.2017
(51) Int. Cl.: H02G 1/10, H02G 3/22, E21B 17/02, F03D 80/80

(54) **MOUNTING METHODS AND ASSEMBLIES FOR LONGITUDINALLY EXTENSIVE MEMBERS**
MONTAGEVERFAHREN UND ANORDNUNGEN FÜR IN LÄNGSRICHTUNG AUSGEDEHNTE ELEMENTE
PROCÉDÉS ET ENSEMBLES DE MONTAGE POUR DES ÉLÉMENTS S'ÉTENDANT LONGITUDINALEMENT

(30) Priority: 05.05.2016 GB 201607905
(43) Date of publication of application: 13.03.2019
(73) Proprietor: Tekmar Energy Limited, Newton, Aycliffe DL5 6AR (GB)
(72) Inventor: SIMPSON, Jack, Newton Aycliffe DL5 6AR (GB); CLAYTON, Richard, Newton Aycliffe DL5 6AR (GB); HUGHES, Alex, Newton Aycliffe DL5 6AR (GB); ROWLANDS, Phil, Newton Aycliffe DL5 6AR (GB)
(74) Representative: HGF
(86) International application number: PCT/GB2017/051266
(87) International publication number: WO 2017/191474

(56) References cited:
- WO-A2-2015/071678
- US-A1- 2006 225 891
- US-A1- 2008 264 644
- US-A1- 2011 088 342
- US-B1- 7 010 889

## Description

This invention relates to an interface component useful for mounting a longitudinally extensive member to a location on an offshore structure and to assemblies including the interface component. The longitudinally extensive member can be a longitudinally extensive protection apparatus configured to contain therein a longitudinally extensive service member. Alternatively, the longitudinally extensive member can be an integral longitudinally extensive service member and longitudinally extensive protection apparatus.

The location on the offshore structure can be a location of termination of the longitudinally extensive service member, for connection thereof (or connection of parts thereof) to apparatus or equipment arranged on the offshore structure.

The longitudinally extensive service member can be one or more cables, such as cables for the transmission of electricity or fibre optic cables. The longitudinally extensive service member can be a pipe for use in the oil and gas extraction industries, such as a pipe for the transmission of production fluids.

The longitudinally extensive protection apparatus can be a flexible pipe or tube which can provide a protective duct for the longitudinally extensive service member. The longitudinally extensive protection apparatus can be formed from a polymeric material. The longitudinally extensive protection apparatus can comprise armour wires wound around the longitudinally extensive service member or another element of the longitudinally extensive protection apparatus.

### BACKGROUND

Mounting of longitudinally extensive service members to offshore structures is, as such, well known. For example where the offshore structure is a wind turbine generator, or equipment associated with a group of wind turbine generators such as a sub-station or collecting station, connection of one or more electricity transmission cables and/or fibre optic cables is often required.

Such cables are commonly laid on, or buried under, the seabed and must follow an ascending path, typically mounted to an offshore foundation of the offshore structure, until the leading end of the cable reaches a height on the offshore structure at which it is secured and at which such connections as required can be made to equipment and/or apparatus arranged on the offshore structure.

On their ascending path from the seabed, cable protection devices are usually provided to protect the cable from damage. Similarly, in the oil and gas extraction industries, where the longitudinally extensive service member can be a fluid transmission pipe, protection devices are usually provided.

A longitudinally extensive protection apparatus which can be provided is in the form of a longitudinally extensive pipe or tube which can form a protective duct for the longitudinally extensive service member when the longitudinally extensive service member is arranged within the duct. The longitudinally extensive protection apparatus can be a flexible pipe or tube and in some preferred embodiments can be formed from a polymeric material.

Whether the longitudinally extensive protection apparatus is integral with the longitudinally extensive service member or is a separate component thereto, the present application is, in particular embodiments, concerned with methods and apparatus for mounting or securing of a leading end of the longitudinally extensive protection apparatus to an offshore structure. Generally, the leading end of the longitudinally extensive protection apparatus is drawn up through an aperture in a floor of the offshore structure by a cable of a winch mounted on the floor and connected to a pulling head on the leading end of the longitudinally extensive protection apparatus. When the longitudinally extensive protection apparatus comes through the aperture a temporary clamp is attached to hold the longitudinally extensive protection apparatus so that the pulling head can be detached from the longitudinally extensive protection apparatus. Then, a permanent clamp is arranged to secure the longitudinally extensive protection apparatus in the floor.

The longitudinally extensive service member is then either drawn through the longitudinally extensive protection apparatus, where it is a separate component with respect to the protection apparatus, until it also arrives through the aperture in the floor, or it is already above the floor of the offshore structure because it is integral with the protection apparatus. In either case, the longitudinally extensive service member is then connected to the service that requires it.

Frequently, the floor of the offshore structure is part of an enclosed space having minimal headroom. Certainly, there must be enough to allow the winch to operate, but the winch itself then reduces further the space in which to effect the temporary clamp, the permanent clamp and the service connections. Therefore it is an object of the present invention to provide an assembly that enables greater access within the space above the floor of the structure.

A different problem, to some extent a problem borne from the forgoing problem, is that a temporary clamp can comprise two half sleeves of a rigid material such as metal, which are clamped around the longitudinally extensive protection apparatus and define, when so clamped, a flange that cannot pass through the aperture in the floor and which holds the longitudinally extensive protection apparatus in position. However, where the longitudinally extensive protection apparatus and the longitudinally extensive service member are integral components, there is a danger that the side loads imposed by the clamp may damage the longitudinally extensive service member, particularly if it was something relatively fragile like optic fibres.

Another problem is that a rigid clamp member such as described above can impose a risk that a minimum bend radius of the longitudinally extensive protection apparatus might be exceeded through the aperture in the floor at a bottom edge of the clamp. A large bend radius cannot be provided since this would involve increasing the length of the clamp, further inhibiting the space above the floor.

Another problem is that it is frequently necessary to provide an environmental seal between the longitudinally extensive protection apparatus and the longitudinally extensive service member, especially when they are integral components, and split elements such as the temporary, or more especially, the permanent clamps frequently provide leakage paths.

It is an object of the present invention to provide an assembly and method of terminating a longitudinally extensive protection apparatus in the floor of an offshore structure that solves these problems, or at least mitigates their effects.

US 2008/0264644 A1 discloses a method and apparatus for connecting drilling riser strings and compositions thereof. An upset or flare in the riser tube is captured within a multi-piece flange and bolted in place.

US 7010889 B1 discloses a riser support clamp for a pipe riser or conduit. US 2011/0088342 A1 discloses a firestopping bushing.

### BRIEF SUMMARY OF THE DISCLOSURE

In accordance with a first aspect of the present invention there is provided a termination assembly for a longitudinally extensive protection apparatus extending through an aperture in a floor of an off-shore structure, the termination assembly being defined by claim 1.

The sleeve members may be formed of polymeric material or metallic material and may be sufficiently long that a clamp pressure applied by the fasteners over the area between the sleeve members and the longitudinally extensive protection apparatus is sufficiently low to prevent damage to the longitudinally extensive protection apparatus. That is, the clamping force between the sleeve members and the longitudinally extensive protective apparatus must be sufficient to prevent slippage of the longitudinally extensive protection apparatus through the temporary clamp under the weight of the longitudinally extensive protection apparatus.

The sleeve members may be formed of polymeric material and may be sufficiently flexible that the temporary clamp can bend under side loads imposed by the longitudinally extensive protection apparatus, thereby reducing the risk of a minimum bend radius of the longitudinally extensive protection apparatus being exceeded.

The longitudinally extensive protection apparatus may comprise armour wires wrapped around a support element.

The support element may comprise a longitudinally extensive service member integral with said longitudinally extensive protection apparatus.

The permanent clamp plate may comprise a central aperture through which the support element extends, said central aperture having an upstanding cup-wall to receive potting fluid to form a seal between said support element and temporary clamp.

The permanent clamp plate may comprise two half plates butted edge to edge.

The dish plate may be dished at its edge to receive and retain sealant putty providing a seal between the dish plate and the permanent clamp plate.

In another aspect, the invention provides a method of terminating a longitudinally extensive protection apparatus in an aperture in a floor of an off-shore structure, the method comprising:
providing the floor with an aperture member through which to draw the longitudinally extensive protection apparatus;
providing a temporary clamp, in the form of at least two sleeve members;
clamping the sleeve members together with fasteners around the longitudinally extensive protection apparatus above said floor, wherein
lowering a clamp sleeve section of the temporary clamp through the aperture member in the floor; and
supporting the weight of the longitudinally extensive protection apparatus through a clamp flange section of the temporary clamp seating on the aperture member.

The sleeve members may be formed of polymeric material or metallic material and be sufficiently long that a clamp pressure applied by the fasteners over the area between the sleeve members and the longitudinally extensive protection apparatus is sufficiently low to prevent damage to the longitudinally extensive protection apparatus. That is, the clamping force between the sleeve members and the longitudinally extensive protective apparatus must be sufficient to prevent slippage of the longitudinally extensive protection apparatus through the temporary clamp under the weight of the longitudinally extensive protection apparatus.

The sleeve members may be formed of polymeric material and may be sufficiently flexible that the temporary clamp can bend under side loads imposed by the longitudinally extensive protection apparatus, thereby reducing the risk of a minimum bend radius of the longitudinally extensive protection apparatus being exceeded.

The longitudinally extensive protection apparatus may comprise armour wires wrapped around a support element, the method further comprising:
providing the aperture member in the floor with a support shoulder, a wall upstanding from the shoulder, and a dish plate extending radially outwardly from said wall;
supporting the clamp flange section of the temporary clamp on the shoulder surrounded by the wall;
bending the armour wires over the clamp flange section and onto the dish plate; and
securing a permanent clamp plate to the dish plate to clamp the armour wires between the dish plate and permanent clamp plate.

The support element may comprise a longitudinally extensive service member integral with said longitudinally extensive protection apparatus.

The permanent clamp plate may comprises a central aperture through which the support element extends, said central aperture having an upstanding cup-wall, the method further comprising:
pouring settable potting fluid into the gap between said cup-wall and support element to form a seal between said support element and said temporary clamp.

The permanent clamp plate may comprise two half plates butted edge to edge.

The dish plate may be dished at its edge, the method further comprising
applying sealant putty between the dish plate and the permanent clamp plate to form a seal therebetween.

### BRIEF DESCRIPTION OF THE DRAWINGS

Embodiments of the invention are further described hereinafter with reference to the accompanying drawings, in which:
Figure 1 is a schematic illustration of an offshore structure including a longitudinally extensive protection apparatus according to embodiments of the invention;
Figures 2a and b show in section an assembly suitable for use in embodiments of the invention;
Figure 3 shows the assembly of Figure 2 in perspective view;
Figure 4 shows in section part of an assembly suitable for use in embodiments of the invention; and
Figure 5 shows a further example of a termination assembly.

### DETAILED DESCRIPTION

Referring now to the drawings, an offshore structure 100 can include a foundation 110 which can be mounted to the seabed 10 and can extend above the water surface 20. Offshore structure 100 can include one or more platform levels 140 or the like typically arranged at or above an upper part of foundation 110. Platform levels 140 can provide access for personnel to work on the offshore structure such as at times of installation of the offshore structure or of components, apparatus and equipment which can be disposed on the offshore structure 100.

In embodiments of the invention, the offshore structure can be a wind turbine generator (WTGs) structure, or apparatus such as a collection station or substation associated with an offshore wind energy field including a plurality of WTGs. In other embodiments the offshore structure can be an installation or facility associated with offshore oil or gas extraction, such as a rig. In some embodiments the offshore structure can be mounted to the seabed. In other embodiments the offshore structure can be a floating structure such as a floating oil or gas rig or a wind turbine generator on a floating foundation.

Platform level 140 can also provide a location for termination on the offshore structure 100 of a leading end of a longitudinally extensive protection apparatus 200.

In some preferred embodiments of the invention the longitudinally extensive protection apparatus 200 can be a longitudinally extensive pipe or tube. In some preferred embodiments the longitudinally extensive pipe or tube can be flexible. In some advantageous embodiments the flexible pipe or tube 200 can be formed from a polymer material such as high density polyethylene. In some preferred embodiments the longitudinally extensive pipe or tube can be unitary. In other preferred embodiments the longitudinally extensive pipe or tube can comprise a plurality of conjoined sections.

Longitudinally extensive protection apparatus 200 can, in some embodiments, provide a longitudinally extensive flexible protective duct which can contain longitudinally extensive service member 400 such as one or more electricity transmission cables, one or more fibre optic cables or a pipe for the transmission of fluids. In some particularly preferred embodiments the longitudinally extensive service member 400 can be at least one electricity transmission cable and/or at least one fibre optic cable.

In another embodiment, the longitudinally extensive protection apparatus 200 can be integral with the longitudinally extensive service member 400 where the protection apparatus comprises or includes armour wires wound around a support element surrounding the longitudinally extensive service member. Indeed, the longitudinally extensive service member may constitute the support element.

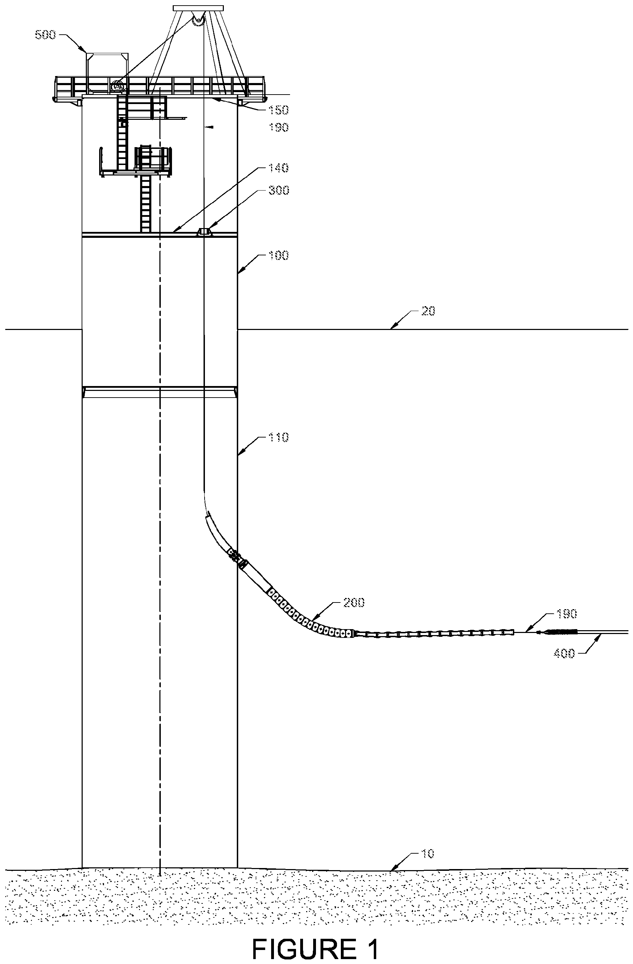

In the particular embodiment illustrated in Figure 1, a winch 500 is shown having a cable 190 employed to hoist the longitudinally extensive protection apparatus 200 and/or longitudinally extensive service member 400. A ceiling 150 is also shown representing a limitation of headroom above the floor 140, as is frequently the case in many installations.

Termination of the longitudinally extensive protection apparatus at a platform level 140 can in some embodiments of the invention require the provision of termination apparatus or equipment 300 by which the longitudinally extensive protection apparatus can be secured to the offshore structure 100. In such embodiments, the termination apparatus 300 can be configured to bear the weight of the longitudinally extensive protection apparatus hanging from the offshore structure 100 below the platform 140. Thus in these embodiments the platform level 140 and the parts and components of the termination apparatus 300 can each be configured so that the termination apparatus can support the weight of the longitudinally extensive protection apparatus 200 when said apparatus 200 is hanging from the termination apparatus 300 below the platform level 140.

Termination apparatus 300 can also in embodiments of the invention provide a termination for the longitudinally extensive service member 400 contained in the longitudinally extensive protection apparatus 200. Thus in embodiments of the invention a leading end of the longitudinally extensive service member 400 may also be secured to the termination apparatus 300.

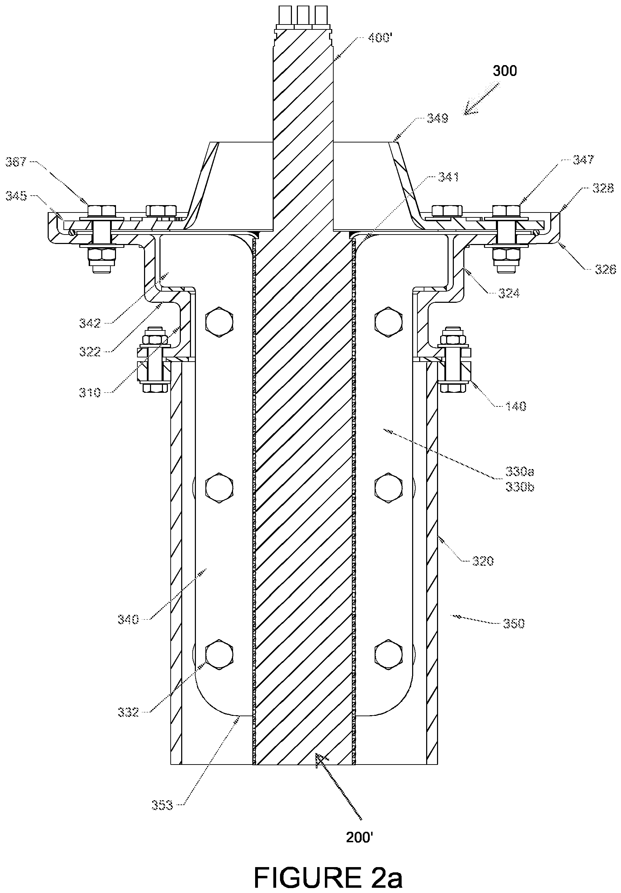

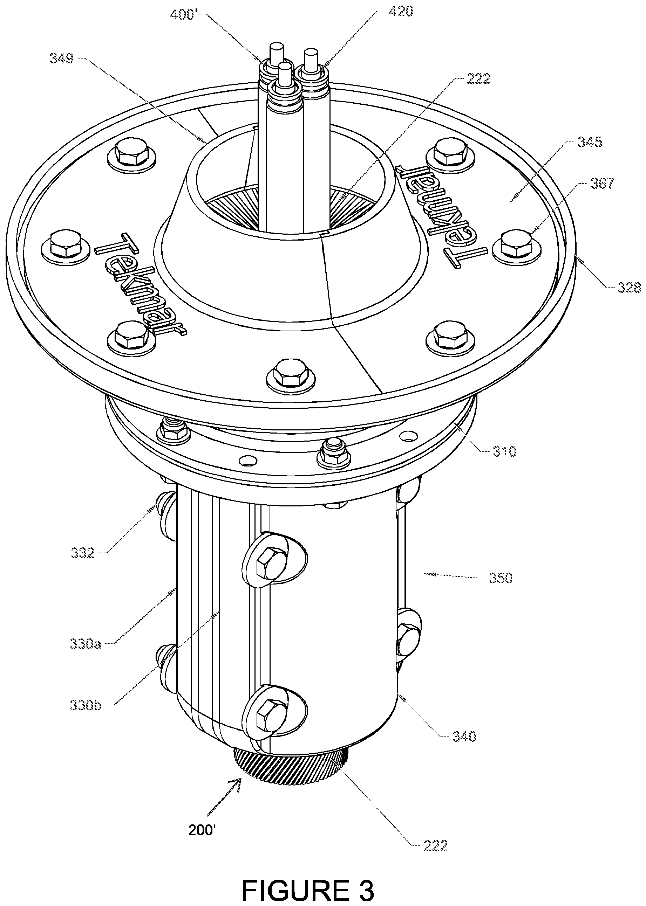

Turning to Figures 2a and 3, termination apparatus 300 comprises an aperture member 310 welded or otherwise secured in floor 140. The aperture member 310 comprises a downwardly extending tube member 320 that may be relatively short length of tube. Alternatively, but not within the scope of the present invention, it may comprise the longitudinally extensive protection apparatus 200 of Figure 1. In the either case, the means by which the tube member 320 is disposed in position and fixed to the floor member 140 is not relevant to the present discussion, which is here concerned with longitudinally extensive protection apparatus 200' that is integral with longitudinally extensive service member 400'.

The tube member 320 is terminated above the floor 140 by a shoulder 322, which has a surrounding wall 324. On the top edge of the wall 324 is a dish plate 326 that has a surrounding shallow lip 328.

Longitudinally extensive protection apparatus 200' comprises armour wires 222, visible in Figure 3, wrapped around and protecting longitudinally extensive service member 400' with which the longitudinally extensive protection apparatus 200' is integral. As can be seen in Figure 3, in this embodiment, the longitudinally extensive service member 400' has three cables 420.

When the longitudinally extensive protection apparatus 200' has been winched through the tube member 320 and aperture member 310 by the winch 500, two clamp sleeve members 330a,b are clamped together around the longitudinally extensive protection apparatus 200' by fasteners, conveniently in the form of nuts and bolts 332. In this example, the clamp sleeve members are moulded by a hard plastics material such as polyurethane, having a shore hardness of 82D. Other hardnesses are acceptable, possibly in the range from 95A to 90D. However, if the material is too soft, among other things, the fasteners may deform the material and sufficient pressure may not be applied by the sleeve members 330a,b to grip the longitudinally extensive protection apparatus 200', as required and described further below. Conversely, if the material is too hard, it may be brittle and crack under the loads imposed.

The sleeve members 330a,b when bolted together define a clamp sleeve section 340 and a clamp flange section 342 and constitutes a temporary clamp 350. The winch 500 is then operated in reverse to lower the longitudinally extensive protection apparatus 200', with the temporary clamp 350 in place, back through the aperture member 310 until the clamp flange 342 comes to rest on the shoulder 322 of the aperture member 310. The wall 324 surrounds the clamp flange and they are substantially the same height. That height is enough to give the clamp 350 sufficient strength to support the weight of the longitudinally extensive protection apparatus 200'. Once the tension in the cable 190 is released the entire weight of the longitudinally extensive protection apparatus 200' is carried by the clamp flange 342. From this it follows that the temporary clamp 350 must be sufficiently tight on the longitudinally extensive protection apparatus 200' that it does not slip through. Because the clamp is made of plastics material, the clamping force cannot be that great, at least not without risking deformation of the plastics material by the fasteners, or shattering it if it is too hard. Consequently, the clamp sleeve 340 is long, (in some applications about 500mm long) whereby the smaller pressure capable of being applied is applied over a larger area of the surface of the longitudinally extensive protection apparatus 200'. In this way, sufficient friction exists between the clamp and longitudinally extensive protection apparatus that the apparatus is held in place. Also, because only a light force is applied, this has the added benefit of being unlikely to damage the internal components of the longitudinally extensive service member 400'.

Hitherto, such a long clamp sleeve would be an issue because it would raise the termination 300 to an unacceptable height above the floor 140. However, the clamp sleeve 340 is allowed to fall below the floor level 140, since the clamp flange 342 is adequate to take the weight.

When the temporary clamp is in position in the aperture member 310, the winch cable 190 is detached and the longitudinally extensive protection apparatus 200' is stripped back to expose the armour wires 222 and the internal components of the longitudinally extensive service member 400', in the case of Figure 3, three-phase electricity cables 420. These might be to supply power to the installation or, in the case of a wind turbine generator, could be to unload generated electrical power from the turbine.

The armour wires are bent over the internal radius 341 of the clamp flange 342, which radius is chamfered so that the anchor wires are not bent beyond an acceptable minimum bend radius for that component. In any event, as explained further below, since the clamp flange 342 is relatively soft plastics material, the armour wires will cut into the flange in due course should there be any slippage between the temporary clamp 350 and longitudinally extensive protection apparatus 200'. Hence there is little risk of the minimum bend radius being exceeded (by which is meant, bent to a tighter angle than the design of the protection apparatus permits).

After bending over the flange 342, the wires overlie the dish plate 326 and are cut so that they remain within the confines of the lip 328. Then, a permanent clamp plate 345 is applied over the wires 222 sandwiching them between the dish plate 326 and clamp plate 345. Bolts 367 clamp the two together, permanently securing the wires to the termination apparatus 300, and hence the longitudinally extensive protection apparatus 200'. It will be appreciated that it would be difficult to ensure that the wires 222 were tight between the clamp plate 345 and the dish plate 326 when the clamp is first tightened. Hence, over time as the longitudinally extensive protection apparatus 200' gradually slips in the temporary clamp 350, the permanent clamp will take over the support function for the longitudinally extensive protection apparatus 200'. Some of the wires will initially be tighter than others, but as they cut into material of the temporary clamp the tension in the wires will gradually equalise sharing the load evenly between them.

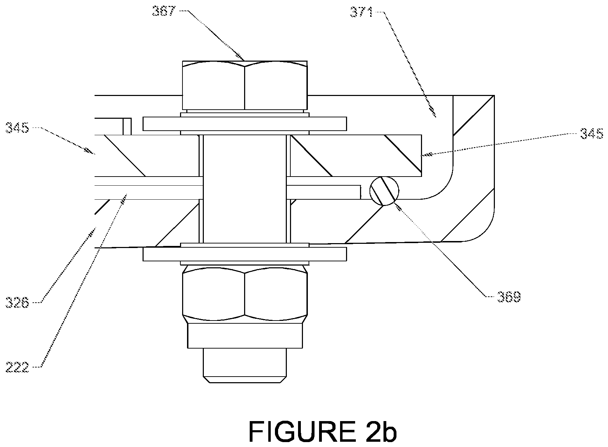

The permanent clamp plate is provided with a central opening and cup-wall 349. Into this cup can be poured resinous potting compound such as polyurethane casting resin. A suitable type is PC5581. Such a curable compound will penetrate gaps between the wires 222 and adhere to the polyurethane of the clamp 350, penetrating gaps between the clamp sleeve 330a,b, as well as penetrating the longitudinally extensive service member 400' and between its cables 420. A reliable seal is thereby ensured of the open end of the longitudinally extensive protection apparatus 200'. A further seal can be provided by filling the gap between the lip 328 of the aperture member 310 and the clamp plate 345 using a putty such as Prysmian Weatherproof Plastic Compound R391 or R392 (supplied by Thorne & Derrick UK), which can be moulded into place and is a non-hardening weather proof sealant. This prevents the ends of the wires 222 from being exposed to the external environment and possibly subject to corrosion. Before putting the clamp plate 345 in place and tightening bolts 367 to effect the clamping of the wires 222, an O-ring 369 (see Figure 2b) can be disposed around the dish plate to effect a mechanical seal. That seal is further enhanced and itself protected from the environment by the putty placed in the annular gap 371 between the plates 345,326.

Thus while the clamp sleeve is long at perhaps 500 mm, it does not interfere with the space between the floor 140 and ceiling 150 because it largely hangs below the floor 140. Furthermore, because the clamp is of plastics and therefore cannot be excessively tight on the power cable, side wall pressure limits of the longitudinally extensive protection apparatus 200' and service member 400' are unlikely to be exceeded. In addition, the flexibility of the polyurethane or other polymer clamp sleeve 340 is such that, not only will the clamp sleeve potentially deflect to some extent when side loads are applied by the longitudinally extensive protection apparatus 200', but also bottom edge 353 of the sleeve clamp in contact with the longitudinally extensive protection apparatus 200' will have some deformation possibility that would not exist with a metal clamp.

Because the aperture member 310 is fully enclosed (i.e. not joined from multiple split components) the possibility of an effective and long lasting seal for the end of the longitudinally extensive protection apparatus 200' is largely ensured. Indeed, the clamp plate 345 can also be fully enclosed with the winch cable 190 passing through it. It needs to be lifted to allow the sleeve members to be fitted on the longitudinally extensive protection apparatus 200' underneath the clamp plate 345. This recessed arrangement into a fully circular (non-split) base component means that sealing resin can be poured into the hang-off assembly with it escaping through any split joins on the outer circumferential edge or exposed gaps in between the armour wire clamp plates. Thus complete sealing can be assured. It is to be noted that, despite the effective sealing, this is achieved with a minimum of sealing compound since there are only two volumes to seal, namely that defined by the inner and outer circumferences of the clamp plate 345. There is no requirement to fully encapsulate the entire termination 300.

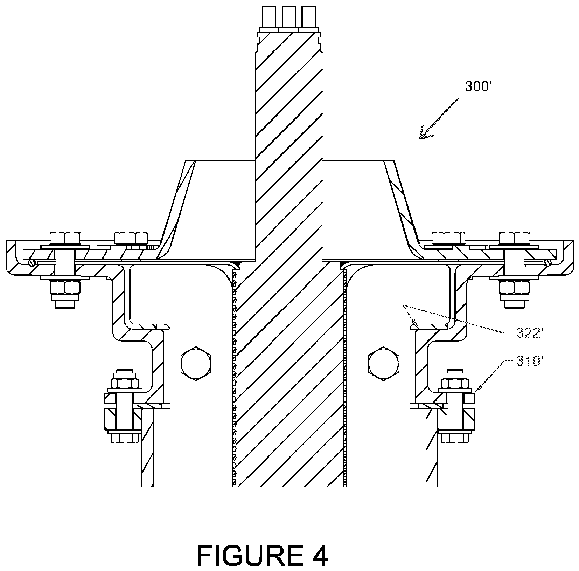

Figure 4 shows a slightly modified aperture member 310' having further reduced height where the shoulder 322' is at the floor level 140, whereby the height of the top of the cup wall 349, being the top of the terminator 300' is only about 186 mm above floor level. The embodiment of Figure 2a has the same dimension at 251 mm so the present invention enables a height of less than 300 mm above floor level for the intrusion of the terminator 300,300' whereby more room is available under the ceiling 150, whatever its height, to complete terminations of the longitudinally extensive service member 400'.

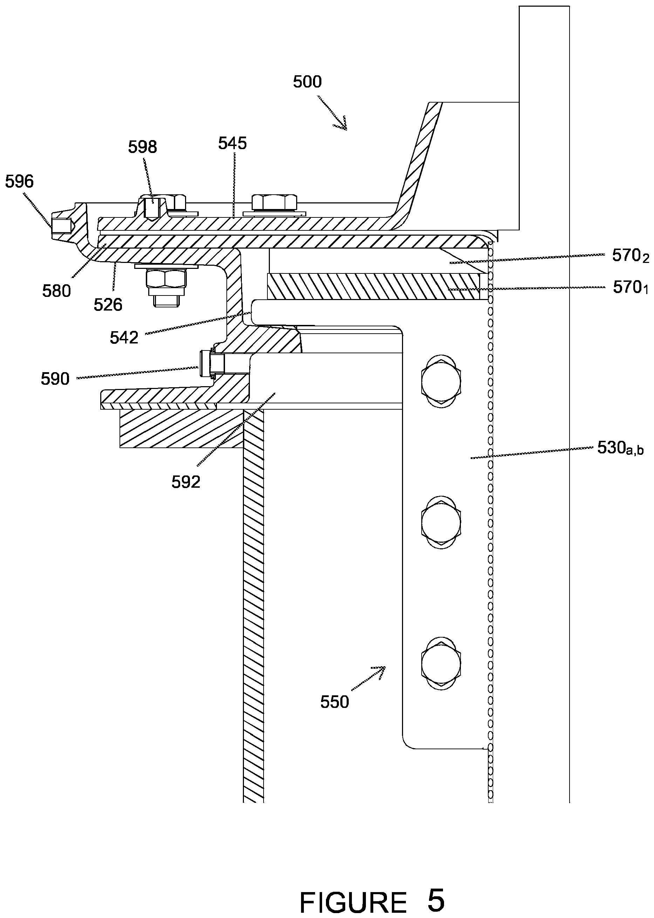

Figure 5 shows a further example of a termination assembly 500. The termination assembly 500 has corresponding features to that of termination 300, which will not be discussed in more detail here.

The temporary clamp 550 includes sleeve members 530a and 530b, which are made of metallic material, such as spheroidal graphite iron, ductile iron or steel. Metallic sleeve members have the advantage of increased thermal conductivity, which aids heat dissipation from the longitudinally extensive service member. Metallic sleeve members also have the advantage that the sleeve members may have a shorter length than corresponding polymeric sleeve members.

The temporary clamp 550 further includes lower permanent clamp plate 580. The lower permanent clamp plate 580 is provided between the dishplate 526 and the upper clamp plate 545, such that in the permanent clamping position the armour wires sit between the lower permanent clamp plate 580 and the upper clamp plate 545. In this manner the lower permanent clamp plate 580 provides a positive interface for the underside of the armour wires. This prevents creep of the armour wires and a loss of clamping ability.

The temporary clamp 550 further includes spacer plates 570₁ and 570₂ (referred to collectively as 570). The spacer plates 570 are used to pack the void between the flange 542 of the metallic sleeve members and the lower permanent clamp plate 580, as the flange 542 of the metallic sleeve members is thinner than the flange of a polymeric sleeve member. The spacer plates 570 may incorporate radial grooves (not shown) to improve sealing resin flow. There may be any number of spacer plates, depending on the void between the flange 542 of the metallic sleeve members and the lower permanent clamp plate 580 (or between the flange 542 of the metallic sleeve members and the clamp plate 545 for an example where there is no lower permanent clamp plate). For example, there may be 1 or 3 spacer plates.

The termination assembly 500 includes ventilation port 590. The ventilation port provides a bypass into the J-tube cavity 592. The ventilation port allows fluctuations of pressure to be vented from the J-tube cavity. For example, fluctuations in pressure may be vented through the ventilation port 590 during the sealing resin curing process. This avoids damage to the resin sealing arrangement as it set, for example in the form of air bubbles. The ventilation port 590 may be sealed once the resin is cured to create a fully sealed unit. For example, the ventilation port 590 may include a threaded bore, allowing the port to be sealed using a threaded plug.

One or more earth bosses may be included on the dish plate 526 and/or the upper clamp plate 545. In the example shown in Fig. 5, a threaded earth boss 596 is included on the dishplate 526 for connection to an earthing strap. In the example shown in Fig. 5, a threaded earth boss 598 is included on the upper clamp plate 545 for connection to an earthing strap. Jumper cables may be connected between the earth bosses on the upper clamp plate 545 and the dishplate 526. A main earth cable may be secured to the dishplate 526, which terminates at a point located on the foundation structure, ensuring that the termination assembly 500 is adequately earthed.

Various modifications to the detailed arrangements discussed above are possible.

The clamp sleeve may have any suitable number of fasteners. For example there may be a total of 4 fasteners used to clamp together clamp sleeve members 330a and 330b. Alternatively there may be a total of 6, 8, 10 or more fasteners. The number of fasteners will be chosen according to the length of the clamp sleeve, and hence the required force. For example, as the length of the clamp sleeve is increased, the number of fasteners may also be increased.

The O-ring 369 may be omitted and instead the seal between plates 345 and 326 may be produced using only the putty placed in the annular gap 371, between the plates 345 and 326.

The cables 420 may be heat or flame treated prior to the introduction of the sealing resin through the central opening to improve adhesion between the cables 420 and the sealing resin without the use of aggressive chemicals. The heat or flame treatment increases the surface energy of the outer plastic of the cable 420, improving adhesion between the cable and the sealing resin.

The heat or flame treatment may be undertaken using a portable gas torch or the like. The torch may be used in vertical brush like motions whilst moving circumferentially around the outer surface of the cable core, ensuring no region of the cable is under direct heat for longer than approximately 2 seconds. The torch tip may be positioned such that the tip of the secondary flame cone is in contact with the surface of the cable 420 being treated. For example the torch tip may be positioned between around 50mm and 150mm from the surface of the cable. More aptly, the torch tip may be positioned around 100mm from the surface of the cable. The distance may have to be adjusted for different torches. The torch may be fitted with a point nozzle. The point nozzle improves accuracy and aids access within the limited space between cable cores.

Upon completion of the heat or flame treatment, the hang-off sealing resin may be applied within 15 minutes. For this reason the heat treating process may only be conducted upon a hang-off assembly that is prepared to receive the resin immediately afterwards.

Heat or flame treatment may be used for all exposed cores/cable protrusions through the reservoir region of the hang-off arrangement. Flame treatment allows carbon deposits to be introduced upon the surface of the cable core providing additional substrate for the resin to bond to.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A termination assembly (300, 300', 500) for a longitudinally extensive protection apparatus (200, 200') extending through an aperture in a floor (140) of an off-shore structure, the assembly (300, 300', 500) comprising:
a temporary clamp (350, 550), in the form of at least two sleeve members (330a, 330b, 550a, 550b) which, when clamped together by fasteners (332) around the longitudinally extensive protection apparatus (200, 200') above said floor (140), define a clamp sleeve section (340) and a clamp flange section (342, 542),
an aperture member (310, 310') for securing in the floor (140), wherein the aperture member (310, 310') comprises a tube member (320) with a support shoulder (322, 322'), a wall (324) upstanding from the support shoulder (322, 322'), and a dish plate (326, 526) extending radially outwardly from said wall (324), wherein
the clamp sleeve section (340) is configured to extend through the aperture member (310, 310'); and
the clamp flange section (342, 542) is configured to sit on the shoulder (322, 322') of the aperture member (310, 310') such that the wall (324) of the aperture member (310, 310') surrounds the clamp flange section (342, 542) such that in use the weight of the longitudinally extensive protection apparatus (200, 200') is supported by the clamp flange section (342, 542) on the aperture member (310, 310') in the floor (140), and
further comprising a permanent clamp plate (345, 545) for securing to the dish
plate (326, 526) and for clamping armour wires (222) of the longitudinally extensive
protection apparatus (200, 200') between the dish plate (326, 526) and the permanent clamp plate (345, 545).

2. A termination assembly (300, 300', 500) as claimed in claim 1, wherein the sleeve members (330a, 330b, 550a, 550b) are formed of polymeric material and are sufficiently long that a clamp force applied by the fasteners (332) between the sleeve members (330a, 330b, 550a, 550b) and the longitudinally extensive protection apparatus (200, 200') is sufficient to prevent slippage of the longitudinally extensive protection apparatus (200, 200') through the temporary clamp (350, 550) under the weight of the longitudinally extensive protection apparatus (200, 200').

3. A termination assembly (300, 300', 500) as claimed in claim 1, wherein the sleeve members (330a, 330b, 550a, 550b) are formed of metallic material and are sufficiently long that a clamp force applied by the fasteners (332) between the sleeve members (330a, 330b, 550a, 550b) and the longitudinally extensive protection apparatus (200, 200') is sufficient to prevent slippage of the longitudinally extensive protection apparatus (200, 200') through the temporary clamp (350, 550) under the weight of the longitudinally extensive protection apparatus (200, 200').

4. A termination assembly (300, 300', 500) as claimed in claim 1, wherein the permanent clamp plate (345, 545) comprises a central aperture through which a support element, around which the armour wires (222) of the longitudinally extensive protection apparatus are wrapped, extends, said central aperture having an upstanding cup-wall (349) to receive potting fluid to form a seal between said support element and temporary clamp (350, 550).

5. A termination assembly (300, 300', 500) as claimed in any preceding claim,
wherein the permanent clamp plate (345, 545) comprises two half plates butted edge to edge.

6. A termination assembly (300, 300', 500) as claimed in any preceding claim,
wherein the dish plate (326, 526) is dished at its edge to receive and retain sealant providing a seal between the dish plate (326, 526) and the permanent clamp plate (345, 545).

7. A method of terminating a longitudinally extensive protection apparatus (200, 200') in an aperture in a floor (140) of an off-shore structure, the method comprising:
providing the floor (140) with an aperture member (310, 310') through which to draw the longitudinally extensive protection apparatus (200, 200');
providing a temporary clamp (350, 550), in the form of at least two sleeve members (330a, 330b, 550a, 550b);
clamping the sleeve members (330a, 330b, 550a, 550b) together with fasteners (332) around the longitudinally extensive protection apparatus (200, 200') above said floor (140), wherein
lowering a clamp sleeve section (340) of the temporary clamp (350, 550) through the aperture member (310, 310') in the floor (140); and
supporting the weight of the longitudinally extensive protection apparatus (200, 200') through a clamp flange section (342, 542) of the temporary clamp (350, 550) seating on the aperture member (310, 310').

8. A method as claimed in claim 7 wherein
the sleeve members (330a, 330b, 550a, 550b) are formed of polymeric material and are sufficiently long that a clamp force applied by the fasteners (332) between the sleeve members (330a, 330b, 550a, 550b) and the longitudinally extensive protection apparatus (200, 200') is sufficient to prevent slippage of the longitudinally extensive protection apparatus (200, 200') through the temporary clamp (350, 550) under the weight of the longitudinally extensive protection apparatus (200, 200'); and
the sleeve members (330a, 330b, 550a, 550b) are sufficiently flexible that the temporary clamp (350, 550) can bend under side loads imposed by the longitudinally extensive protection apparatus (200, 200'), thereby reducing the risk of a minimum bend radius of the longitudinally extensive protection apparatus (200, 200') being exceeded.

9. A method as claimed in claim 7 wherein
the sleeve members (330a, 330b, 550a, 550b) are formed of metallic material and are sufficiently long that a clamp force applied by the fasteners (332) between the sleeve members (330a, 330b, 550a, 550b) and the longitudinally extensive protection apparatus (200, 200') is sufficient to prevent slippage of the longitudinally extensive protection apparatus (200, 200') through the temporary clamp (350, 550) under the weight of the longitudinally extensive protection apparatus (200, 200').

10. A method as claimed in claim 7, 8 or 9, wherein the longitudinally extensive protection apparatus (200, 200') comprises armour wires (222) wrapped around a support element, the method further comprising:
providing the aperture member (310, 310') in the floor with a support shoulder (322, 322'), a wall (324) upstanding from the shoulder (322, 322'), and a dish plate (326, 526) extending radially outwardly from said wall (324);
supporting the clamp flange section (342, 542) of the temporary clamp (350, 550) on the shoulder (322, 322') surrounded by the wall (324);
bending the armour wires (222) over the clamp flange section (342, 542) and onto the dish plate (326, 526); and
securing a permanent clamp plate (345, 545) to the dish plate (326, 526) to clamp the armour wires (222) between the dish plate (326, 526) and permanent clamp plate (345, 545).

11. A method as claimed in claim 10, wherein the support element comprises a longitudinally extensive service member (400, 400') integral with said longitudinally extensive protection apparatus (200, 200').

12. A method as claimed in claim 10 or 11, wherein the permanent clamp plate (345, 545) comprises a central aperture through which the support element extends, said central aperture having an upstanding cup-wall (349), the method further comprising
pouring settable potting fluid into the gap between said cup-wall (349) and support element to form a seal between said support element and said temporary clamp (350, 550).

13. A method as claimed in claim 10, 11 or 12, wherein the permanent clamp plate (345, 545) comprises two half plates butted edge to edge.

14. A method as claimed in any of claims 10 to 13, wherein the dish plate (326, 526) is dished at its edge, the method further comprising
applying sealant between the dish plate (326, 526) and the permanent clamp plate (345, 545) to form a seal therebetween.

15. A termination assembly (300, 300', 500) as claimed in any of claims 1 to 6, wherein the sleeve members (330a, 330b, 550a, 550b) are sufficiently flexible that the temporary clamp (350, 550) can bend under side loads imposed by the longitudinally extensive protection apparatus (200, 200'), thereby reducing the risk of a minimum bend radius of the longitudinally extensive protection apparatus (200, 200') being exceeded.

## Patentansprüche

1. Abschlussanordnung (300, 300', 500) für eine in Längsrichtung ausgedehnte Schutzvorrichtung (200, 200'), die sich durch eine Öffnung in einem Boden (140) einer Offshore-Struktur erstreckt, die Anordnung (300, 300', 500) umfassend:
eine temporäre Klemmung (350, 550) in der Form von mindestens zwei Hülsenelementen (330a, 330b, 550a, 550b), die, wenn sie durch Befestigungsmittel (332) um die sich in Längsrichtung ausgedehnte Schutzvorrichtung (200, 200') oberhalb des Bodens (140) zusammengeklemmt werden, einen Klemmhülsenabschnitt (340) und einen Klemmflanschabschnitt (342, 542) definieren,
ein Öffnungselement (310, 310') zum Befestigen in dem Boden (140), wobei das Öffnungselement (310, 310') ein Rohrelement (320) mit einem Stützabsatz (322, 322'), eine von dem Stützabsatz (322, 322') aufragende Wand (324) und eine sich von der Wand (324) radial auswärts erstreckende Schalenplatte (326, 526) umfasst, wobei
der Klemmhülsenabschnitt (340) konfiguriert ist, um sich durch das Öffnungselement (310, 310') zu erstrecken; und
der Klemmflanschabschnitt (342, 542) konfiguriert ist, um auf dem Absatz (322, 322') des Öffnungselements (310, 310') zu sitzen, sodass die Wand (324) des Öffnungselements (310, 310') den Klemmflanschabschnitt (342, 542) umgibt, sodass in der Verwendung das Gewicht der in Längsrichtung ausgedehnten Schutzvorrichtung (200, 200') durch den Klemmflanschabschnitt (342, 542) auf dem Öffnungselement (310, 310') in dem Boden (140) abgestützt ist, und
ferner umfassend eine permanente Klemmplatte (345, 545) zum Befestigen an der Schalenplatte (326, 526) und zum Einklemmen von Verstärkungsdrähten (222) der in Längsrichtung ausgedehnten Schutzvorrichtung (200, 200') zwischen der Schalenplatte (326, 526) und der permanenten Klemmplatte (345, 545).

2. Abschlussanordnung (300, 300', 500) nach Anspruch 1, wobei die Hülsenelemente (330a, 330b, 550a, 550b) aus Polymermaterial gebildet sind und ausreichend lang sind, dass eine Klemmkraft, die durch die Befestigungselemente (332) zwischen den Hülsenelementen (330a, 330b, 550a, 550b) und der in Längsrichtung ausgedehnten Schutzvorrichtung (200, 200') ausgeübt wird, ausreichend ist, um ein Rutschen der in Längsrichtung ausgedehnten Schutzvorrichtung (200, 200') durch die temporäre Klemmung (350, 550) unter dem Gewicht der in Längsrichtung ausgedehnten Schutzvorrichtung (200, 200') zu verhindern.

3. Abschlussanordnung (300, 300', 500) nach Anspruch 1, wobei die Hülsenelemente (330a, 330b, 550a, 550b) aus Metallmaterial gebildet sind und ausreichend lang sind, dass eine Klemmkraft, die durch die Befestigungselemente (332) zwischen den Hülsenelementen (330a, 330b, 550a, 550b) und der in Längsrichtung ausgedehnten Schutzvorrichtung (200, 200') ausgeübt wird, ausreichend ist, um ein Rutschen der in Längsrichtung ausgedehnten Schutzvorrichtung (200, 200') durch die temporäre Klemmung (350, 550) unter dem Gewicht der in Längsrichtung ausgedehnten Schutzvorrichtung (200, 200') zu verhindern.

4. Anschlussanordnung (300, 300', 500) nach Anspruch 1, wobei die permanente Klemmplatte (345, 545) eine mittlere Öffnung umfasst, durch die sich ein Stützelement erstreckt, um das die Verstärkungsdrähte (222) der in Längsrichtung ausgedehnten Schutzvorrichtung gewickelt sind, wobei die mittlere Öffnung eine aufrechte Schalenwand (349) zum Aufnehmen von Vergussfluid aufweist, um eine Dichtung zwischen dem Stützelement und der temporären Klemmung (350, 550) zu bilden.

5. Abschlussanordnung (300, 300', 500) nach einem vorherigen Anspruch, wobei die permanente Klemmplatte (345, 545) zwei Plattenhälften umfasst, die Kante an Kante aneinanderstoßen.

6. Abschlussanordnung (300, 300', 500) nach einem vorherigen Anspruch, wobei die Schalenplatte (326, 526) an ihrem Rand gewölbt ist, um Dichtungsmittel aufzunehmen und zurückzuhalten, das eine Abdichtung zwischen der Schalenplatte (326, 526) und der permanenten Klemmplatte (345, 545) bereitstellt.

7. Verfahren zum Abschließen einer in Längsrichtung ausgedehnten Schutzvorrichtung (200, 200') in einer Öffnung in einem Boden (140) einer Offshore-Struktur, das Verfahren umfassend:
Versehen des Bodens (140) mit einem Öffnungselement (310, 310'), durch das die in Längsrichtung ausgedehnte Schutzvorrichtung (200, 200') gezogen werden soll;
Bereitstellen einer temporären Klemmung (350, 550) in der Form von mindestens zwei Hülsenelementen (330a, 330b, 550a, 550b);
Aneinanderklemmen der Hülsenelemente (330a, 330b, 550a, 550b) mit Befestigungselementen (332) um die in Längsrichtung ausgedehnte Schutzvorrichtung (200, 200') oberhalb des Bodens (140), wobei
Absenken eines Klemmhülsenabschnitts (340) der temporären Klemmung (350, 550) durch das Öffnungselement (310, 310') in dem Boden (140); und
Stützen des Gewichts der in Längsrichtung ausgedehnten Schutzvorrichtung (200, 200') durch einen Klemmflanschabschnitt (342, 542) der temporären Klemmung (350, 550), die auf dem Öffnungselement (310, 310') sitzt.

8. Verfahren nach Anspruch 7, wobei
die Hülsenelemente (330a, 330b, 550a, 550b) aus Polymermaterial gebildet sind und ausreichend lang sind, dass eine Klemmkraft, die durch die Befestigungselemente (332) zwischen den Hülsenelementen (330a, 330b, 550a, 550b) und der in Längsrichtung ausgedehnten Schutzvorrichtung (200, 200') ausgeübt wird, ausreichend ist, um ein Rutschen der in Längsrichtung ausgedehnten Schutzvorrichtung (200, 200') durch die temporäre Klemmung (350, 550) unter dem Gewicht der in Längsrichtung ausgedehnten Schutzvorrichtung (200, 200') zu verhindern; und
die Hülsenelemente (330a, 330b, 550a, 550b) ausreichend flexibel sind, dass sich die temporäre Klemmung (350, 550) unter Seitenlasten biegen kann, die von der in Längsrichtung ausgedehnten Schutzvorrichtung (200, 200') ausgeübt werden, wodurch das Risiko einer Überschreitung eines Mindestbiegeradius der in Längsrichtung ausgedehnten Schutzvorrichtung (200, 200') verringert wird.

9. Verfahren nach Anspruch 7, wobei
die Hülsenelemente (330a, 330b, 550a, 550b) aus Metallmaterial gebildet sind und ausreichend lang sind, dass eine Klemmkraft, die durch die Befestigungselemente (332) zwischen den Hülsenelementen (330a, 330b, 550a, 550b) und der in Längsrichtung ausgedehnten Schutzvorrichtung (200, 200') ausgeübt wird, ausreichend ist, um ein Rutschen der in Längsrichtung ausgedehnten Schutzvorrichtung (200, 200') durch die temporäre Klemmung (350, 550) unter dem Gewicht der in Längsrichtung ausgedehnten Schutzvorrichtung (200, 200') zu verhindern.

10. Verfahren nach Anspruch 7, 8 oder 9, wobei die in Längsrichtung ausgedehnte Schutzvorrichtung (200, 200') Verstärkungsdrähte (222) umfasst, die um ein Stützelement gewickelt sind, das Verfahren ferner umfassend:
Versehen des Öffnungselements (310, 310') in dem Boden mit einem Stützabsatz (322, 322'), einer von dem Absatz (322, 322') hochstehenden Wand (324) und einer Schalenplatte (326, 526), die sich radial auswärts von der Wand (324) erstreckt;
Stützen des Klemmflanschabschnitts (342, 542) der temporären Klemmung (350, 550) auf dem von der Wand (324) umgebenen Absatz (322, 322');
Biegen der Verstärkungsdrähte (222) über den Klemmflanschabschnitt (342, 542) und auf die Schalenplatte (326, 526); und
Befestigen einer permanenten Klemmplatte (345, 545) an der Schalenplatte (326, 526), um die Verstärkungsdrähte (222) zwischen der Schalenplatte (326, 526) und der permanenten Klemmplatte (345, 545) einzuklemmen.

11. Verfahren nach Anspruch 10, wobei das Stützelement ein in Längsrichtung ausgedehntes Wartungselement (400, 400') aufweist, das einteilig mit der in Längsrichtung ausgedehnten Schutzvorrichtung (200, 200') gebildet ist.

12. Verfahren nach Anspruch 10 oder 11, wobei die permanente Klemmplatte (345, 545) eine mittlere Öffnung aufweist, durch die sich das Stützelement erstreckt, wobei die mittlere Öffnung eine aufrechte Schalenwand (349) aufweist, das Verfahren ferner umfassend ein Gießen von härtbarem Vergussfluid in den Spalt zwischen der Schalenwand (349) und dem Stützelement, um eine Dichtung zwischen dem Stützelement und der temporären Klemmung (350, 550) zu bilden.

13. Verfahren nach Anspruch 10, 11 oder 12, wobei die permanente Klemmplatte (345, 545) aus zwei Plattenhälften besteht, die Kante an Kante aneinanderstoßen.

14. Verfahren nach einem der Ansprüche 10 bis 13, wobei die Schalenplatte (326, 526) an ihrem Rand gewölbt ist, das Verfahren ferner umfassend ein Anwenden von Dichtungsmittel zwischen der Schalenplatte (326, 526) und der permanenten Klemmplatte (345, 545), um eine Dichtung dazwischen zu bilden.

15. Abschlussanordnung (300, 300', 500) nach einem der Ansprüche 1 bis 6, wobei die Hülsenelemente (330a, 330b, 550a, 550b) ausreichend flexibel sind, dass sich die temporäre Klemmung (350, 550) unter Seitenlasten biegen kann, die von der in Längsrichtung ausgedehnten Schutzvorrichtung (200, 200') ausgeübt werden, wodurch das Risiko einer Überschreitung eines Mindestbiegeradius der in Längsrichtung ausgedehnten Schutzvorrichtung (200, 200') verringert wird.

## Revendications

1. Ensemble de terminaison (300, 300', 500) pour un appareil de protection s'étendant longitudinalement (200, 200') s'étendant à travers une ouverture dans un plancher (140) d'une structure en mer, l'ensemble (300, 300', 500) comprenant :
une pince temporaire (350, 550), sous la forme d'au moins deux éléments de manchon (330a, 330b, 550a, 550b) qui, lorsqu'ils sont serrés ensemble par des éléments de fixation (332) autour de l'appareil de protection s'étendant longitudinalement (200, 200') au-dessus dudit plancher (140), définissent une section de manchon de serrage (340) et une section de bride de serrage (342, 542), un élément d'ouverture (310, 310') destiné à fixer dans le plancher (140), ledit élément d'ouverture (310, 310') comprenant un élément tube (320) avec une épaulement de support (322, 322'), une paroi (324) dressée à partir de l'épaulement de support (322, 322') et une plaque bombée (326, 526) s'étendant radialement vers l'extérieur à partir de ladite paroi (324), ladite section de manchon de serrage (340) étant conçue pour s'étendre à travers l'élément d'ouverture (310, 310'); et
ladite section de bride de serrage (342, 542) étant conçue pour reposer sur l'épaulement (322, 322') de l'élément d'ouverture (310, 310') de sorte que la paroi (324) de l'élément d'ouverture (310, 310') entoure la section de bride de serrage (342, 542) de sorte que lors de l'utilisation le poids de l'appareil de protection s'étendant longitudinalement (200, 200') soit supporté par la section de bride de serrage (342, 542) sur l'élément d'ouverture (310, 310') dans le plancher (140), et comprenant en outre une plaque de serrage permanente (345, 545) destinée à se fixer à la plaque bombée (326, 526) et destinée à serrer les fils d'armure (222) de l'appareil de protection s'étendant longitudinalement (200, 200') entre la plaque bombée (326, 526) et la plaque de serrage permanente (345, 545).

2. Ensemble de terminaison (300, 300', 500) selon la revendication 1, lesdits éléments de manchon (330a, 330b, 550a, 550b) étant constitués d'un matériau polymère et étant suffisamment longs pour qu'une force de serrage appliquée par les éléments de fixation (332) entre les éléments de manchon (330a, 330b, 550a, 550b) et l'appareil de protection s'étendant longitudinalement (200, 200') soit suffisante pour empêcher le glissement de l'appareil de protection s'étendant longitudinalement (200, 200') à travers la bride temporaire (350, 550) sous le poids de l'appareil de protection s'étendant longitudinalement (200, 200').

3. Ensemble de terminaison (300, 300', 500) selon la revendication 1, lesdits éléments de manchon (330a, 330b, 550a, 550b) étant constitués d'un matériau métallique et étant suffisamment longs pour qu'une force de serrage appliquée par les éléments de fixation (332) entre les éléments de manchon (330a, 330b, 550a, 550b) et l'appareil de protection s'étendant longitudinalement (200, 200') soit suffisante pour empêcher le glissement de l'appareil de protection s'étendant longitudinalement (200, 200') à travers la pince temporaire (350, 550) sous le poids de l'appareil de protection s'étendant longitudinalement (200, 200').

4. Ensemble de terminaison (300, 300', 500) selon la revendication 1, ladite plaque de serrage permanente (345, 545) comprenant une ouverture centrale à travers laquelle un élément de support, autour duquel les fils d'armure (222) de l'appareil de protection s'étendant longitudinalement sont enveloppés, s'étend, ladite ouverture centrale possédant une paroi de coupe verticale (349) pour recevoir le fluide de remplissage pour former un joint d'étanchéité entre ledit élément de support et la pince temporaire (350, 550).

5. Ensemble de terminaison (300, 300', 500) selon l'une quelconque des revendications précédentes, ladite plaque de serrage permanente (345, 545) comprenant deux demi-plaques en butée bord à bord.

6. Ensemble de terminaison (300, 300', 500) selon l'une quelconque des revendications précédentes, ladite plaque bombée (326, 526) étant bombée au niveau de son bord pour recevoir et retenir le produit d'étanchéité fournissant un joint d'étanchéité entre la plaque bombée (326, 526) et la plaque de serrage permanente (345, 545).

7. Procédé de terminaison d'un appareil de protection s'étendant longitudinalement (200, 200') dans une ouverture dans un plancher (140) d'une structure en mer, le procédé comprenant :
l'aménagement dans le plancher (140) d'un élément d'ouverture (310, 310') à travers lequel l'appareil de protection s'étendant longitudinalement (200, 200') est tiré ;
la fourniture d'une pince temporaire (350, 550), sous la forme d'au moins deux éléments de manchon (330a, 330b, 550a, 550b) ;
le serrage des éléments de manchon (330a, 330b, 550a, 550b) ensemble avec des éléments de fixation (332) autour de l'appareil de protection s'étendant longitudinalement (200, 200') au-dessus dudit plancher (140), ledit abaissement d'une section de manchon de serrage (340) de la pince temporaire (350, 550) à travers l'élément d'ouverture (310, 310') dans le plancher (140) ; et
le support du poids de l'appareil de protection s'étendant longitudinalement (200, 200') à travers une section de bride de serrage (342, 542) de la bride temporaire (350, 550) reposant sur l'élément d'ouverture (310, 310').

8. Procédé selon la revendication 7, lesdits éléments de manchon (330a, 330b, 550a, 550b) étant formés d'un matériau polymère et étant suffisamment longs pour qu'une force de serrage appliquée par les éléments de fixation (332) entre les éléments de manchon (330a, 330b, 550a, 550b) et ledit appareil de protection s'étendant longitudinalement (200, 200') soit suffisante pour empêcher le glissement de l'appareil de protection s'étendant longitudinalement (200, 200') à travers la pince temporaire (350, 550) sous le poids de l'appareil de protection s'étendant longitudinalement (200, 200') ; et
lesdits éléments de manchon (330a, 330b, 550a, 550b) étant suffisamment flexibles pour que la pince temporaire (350, 550) puisse se plier sous des charges latérales imposées par l'appareil de protection s'étendant longitudinalement (200, 200'), réduisant ainsi le risque de dépassement d'un rayon de courbure minimal de l'appareil de protection s'étendant longitudinal (200, 200').

9. Procédé selon la revendication 7, lesdits éléments de manchon (330a, 330b, 550a, 550b) étant constitués d'un matériau métallique et étant suffisamment longs pour qu'une force de serrage appliquée par les éléments de fixation (332) entre les éléments de manchon (330a, 330b, 550a, 550b) et l'appareil de protection s'étendant longitudinalement (200, 200') soit suffisante pour empêcher le glissement de l'appareil de protection s'étendant longitudinalement (200, 200') à travers la pince temporaire (350, 550) sous le poids de l'appareil de protection s'étendant longitudinalement (200, 200').

10. Procédé selon la revendication 7, 8 ou 9, ledit appareil de protection s'étendant longitudinalement (200, 200') comprenant des fils d'armure (222) enroulés autour d'un élément de support, le procédé comprenant en outre :
l'aménagement au niveau de l'élément d'ouverture (310, 310') dans le sol d'un épaulement de support (322, 322'), d'une paroi (324) se dressant à partir de l'épaulement (322, 322') et d'une plaque bombée (326, 526) s'étendant radialement vers l'extérieur à partir de ladite paroi (324) ;
le support de la section de bride de serrage (342, 542) de la bride temporaire (350, 550) sur l'épaulement (322, 322') entouré par la paroi (324) ;
le pliage des fils d'armure (222) sur la section de bride de serrage (342, 542) et sur la plaque bombée (326, 526) ; et
la fixation d'une plaque de serrage permanente (345, 545) à la plaque bombée (326, 526) pour serrer les fils d'armure (222) entre la plaque bombée (326, 526) et la plaque de serrage permanente (345, 545).

11. Procédé selon la revendication 10, ledit élément de support comprenant un élément de service s'étendant longitudinalement (400, 400') solidaire dudit appareil de protection s'étendant longitudinalement (200, 200').

12. Procédé selon la revendication 10 ou 11, ladite plaque de serrage permanente (345, 545) comprenant une ouverture centrale à travers laquelle l'élément de support s'étend, ladite ouverture centrale possédant une paroi de coupe verticale (349), le procédé comprenant en outre le versement de fluide de remplissage durcissable dans l'espace entre ladite paroi de coupe (349) et un élément de support pour former un joint d'étanchéité entre ledit élément de support et ladite pince temporaire (350, 550).

13. Procédé selon la revendication 10, 11 ou 12, ladite plaque de serrage permanente (345, 545) comprenant deux demi-plaques en butée bord à bord.

14. Procédé selon l'une quelconque des revendications 10 à 13, ladite plaque bombée (326, 526) étant bombée sur son bord, le procédé comprenant en outre l'application d'un produit d'étanchéité entre la plaque bombée (326, 526) et la plaque de serrage permanente (345, 545) pour former un joint d'étanchéité entre eux.

15. Ensemble de terminaison (300, 300', 500) selon l'une quelconque des revendications 1 à 6, lesdits éléments de manchon (330a, 330b, 550a, 550b) étant suffisamment flexibles pour que la pince temporaire (350, 550) puisse se plier sous les charges latérales imposées par l'appareil de protection s'étendant longitudinalement (200, 200'), réduisant ainsi le risque de dépassement d'un rayon de courbure minimal de l'appareil de protection s'étendant longitudinalement (200, 200').
